(19) **Europäisches Patentamt**
**European Patent Office**
**Office européen des brevets**

(11) **EP 2 958 103 A1**

(12) **EUROPEAN PATENT APPLICATION**

(43) Date of publication:
**23.12.2015 Bulletin 2015/52**

(51) Int Cl.:
*G09G 3/34* (2006.01)          *H04N 19/503* (2014.01)
*H04N 19/196* (2014.01)       *H04N 19/136* (2014.01)
*H04N 19/184* (2014.01)

(21) Application number: **14305970.7**

(22) Date of filing: **20.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing**
**92130 Issy-les-Moulineaux (FR)**

(72) Inventors:
• **Lasserre, Sébastien**
  **35576 Cesson-Sévigné (FR)**

• **Leleannec, Fabrice**
  **35576 Cesson-Sévigné (FR)**
• **Olivier, Yannick**
  **35576 Cesson-Sévigné (FR)**
• **Touze, David**
  **35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Method and device for encoding a sequence of pictures**

(57)     A method for encoding a sequence of pictures is disclosed. The method comprises for at least one picture I:
- determining (S10) a backlight picture from the picture I;
- encoding (S12) data representative of said backlight picture and reconstructing (S12) said backlight picture;
- determining (S14) a residual picture from the picture I and the reconstructed backlight picture; and
- encoding (S18) the residual picture

wherein determining (S10) the backlight picture from the picture I comprises determining a weighted combination of shape functions from the picture I responsive at least to spatially neighboring weights.

**FIGURE 3**

EP 2 958 103 A1

**Description**

1. FIELD OF THE INVENTION

In the following, a method and a device for encoding a sequence of pictures are disclosed. Specifically, the method and the device are for encoding high dynamic range pictures.

2. BACKGROUND OF THE INVENTION

Low-Dynamic-Range pictures (LDR pictures) are pictures whose luminance values are represented with a limited number of bits (most often 8 or 10). Such a representation does not render correctly small signal variations, in particular in dark and bright luminance ranges. In high-dynamic range pictures (HDR pictures), the signal representation is extended in order to maintain a high accuracy of the signal over its entire range. In HDR pictures, pixel values are usually represented in floating-point format (either 32-bit or 16-bit for each component, namely float or half-float).

The most popular high-dynamic-range file format is openEXR half-float format (16-bit per RGB component, i.e. 48 bits per pixel) or openEXR integer format with a long representation, typically at least 16 bits.

It is known for encoding a HDR picture to reduce the dynamic range of the picture in order to encode the picture with a legacy encoder (initially configured to encode LDR pictures).

According to a well-known approach, a backlight picture is determined from the luminance component of the HDR picture. A residual picture is then obtained by dividing the HDR picture by the backlight picture B. Then both the backlight picture and the residual picture are encoded by a legacy encoder such as an H.264/AVC compliant encoder (Recommendation ITU-T H.264) or an HEVC compliant encoder (Recommendation ITU-T H.265).

The compression's efficiency of a sequence of pictures especially depends on the spatial smoothness of each picture. Indeed, video encoders use intra-picture prediction as an efficient tool to compress video data.

In the case where the method for determining the backlight is not spatially stable, one gets halo effect around strong gradients either in the backlight picture or in the residual.

It is further known to determine a viewable LDR picture from the residual picture, e.g. by tone-mapping the residual picture, and to encode the viewable LDR picture. This makes it possible to distribute the HDR pictures(s) to customers equipped with standard LDR TV sets. However, in the case where the method for determining the backlight is not spatially stable, the LDR suffers from annoying spatial artifacts, like halo effects around objects with strong luminance gradients at their boundaries.

There is thus a need to spatially stabilize the backlight pictures.

3. BRIEF SUMMARY OF THE INVENTION

A method for encoding a sequence of pictures is disclosed. The method comprises for at least one picture I:

- determining a backlight picture from the picture I;
- encoding data representative of the backlight picture and reconstructing the backlight picture;
- determining a residual picture from the picture I and from the reconstructed backlight picture; and
- encoding the residual picture

wherein determining the backlight picture from the picture I comprises determining a weighted combination of shape functions from the picture I responsive at least to spatially neighboring weights.

The method is simple since it does not add any noticeable complexity to the backlight determination process. Indeed, this solution does not require any additional pre-processing or post-processing step (e.g. smoothing of the backlight picture in the pixel domain) which can be costly. The backlight pictures determined with this method are spatially smoother and thus can me more efficiently encoded.

According to a specific embodiment, determining a weighted combination of shape functions from the picture responsive at least to spatially neighboring weights comprises minimizing a distance equal to a weighted sum of a first term and a second term, wherein the first term is equal to a pixel by pixel difference between the backlight picture and a luminance component of the picture I and wherein the second term is equal to a Laplacian operator applied on the weights.

In a variant, determining the backlight picture from the picture I comprises determining a weighted combination of shape functions from the picture I responsive to spatially neighboring weights and further responsive to weights determined for a preceding picture.

Advantageously, determining the residual picture from the picture I and the reconstructed backlight picture comprises dividing each component of the picture I by the backlight picture or by a function of the backlight picture.

A encoding device is also disclosed that comprises a processor configured to:

- determine a backlight picture from the picture I;
- encode data representative of the backlight picture and reconstruct the backlight picture;
- determine a residual picture from the picture I and from the reconstructed backlight picture; and
- encode the residual picture;
  wherein determining the backlight picture from the picture I comprises determining a weighted combination of shape functions from the picture I responsive at least to spatially neighboring weights.

According to a specific embodiment, determining a weighted combination of shape functions from the picture responsive at least to spatially neighboring weights comprises minimizing a distance equal to a weighted sum of a first term and a second term, wherein the first term is equal to a pixel by pixel difference between the backlight picture and a luminance component of the picture I and wherein the second term is equal to a Laplacian operator applied on the weights.

Another device for encoding a sequence of pictures is disclosed that comprises:

- means for determining a backlight picture from at least one picture I of the sequence;
- means for encoding data representative of the backlight picture and reconstructing the backlight picture;
- means for determining a residual picture from the picture I and from the reconstructed backlight picture; and
- means for encoding the residual picture;

wherein the means for determining the backlight picture from the picture I are configured to determine a weighted combination of shape functions from the picture I responsive at least to spatially neighboring weights.

The another encoding device is configured to execute the steps of the encoding method according to any of the embodiments disclosed.

A computer program product is disclosed that comprises program code instructions to execute the steps of the encoding method according to any of the embodiments disclosed when this program is executed on a computer.

A processor readable medium is disclosed that has stored therein instructions for causing a processor to perform at least the steps of the encoding method according to any of the embodiments disclosed.

4. BRIEF DESCRIPTION OF THE DRAWINGS

In the drawings, an embodiment of the present invention is illustrated. It shows:

- Figure 1 depicts a device for encoding a sequence pictures according to a specific and non-limitative embodiment of the invention;
- Figure 2 represents an exemplary architecture of the encoding device according to a specific and non-limitative embodiment of the invention;
- Figures 3 depicts a flowchart of a method for encoding a sequence pictures according to a specific and non-limitative embodiment of the invention;
- Figure 4 depicts backlight coefficients on an homogenous grid;
- Figure 5 illustrates a five-point Laplace discretization;
- Figure 6 illustrates a nine-point Laplace discretization; and
- Figure 7 depicts a flowchart of a method for encoding a sequence pictures according to an alternative embodiment of the invention.

5. DETAILED DESCRIPTION OF THE INVENTION

The words "decoded" and "reconstructed" are often used as synonyms. Usually but not necessarily, the word "reconstructed" is used on the encoder side and the word "decoded" is used on the decoder side.

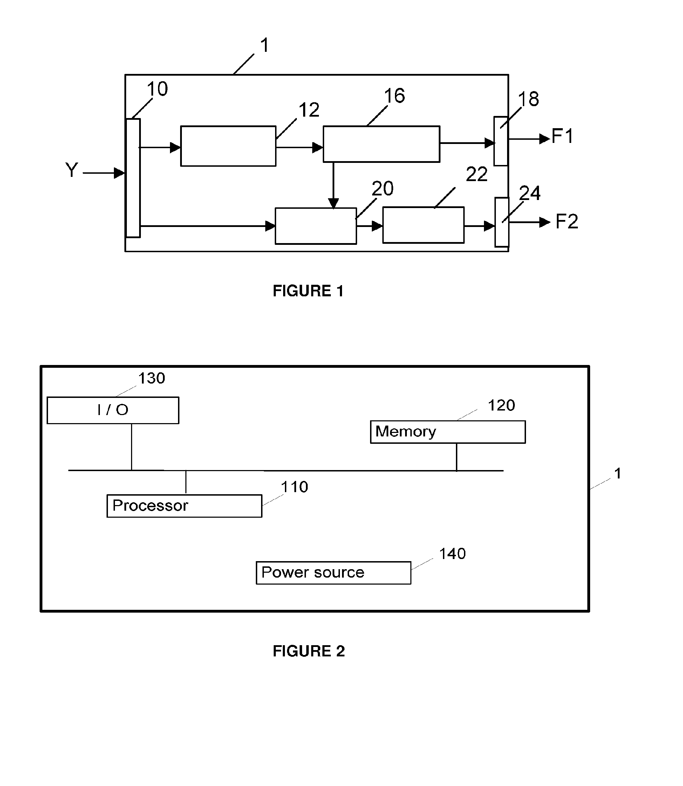

**Figure 1** depicts a device 1 for encoding a sequence pictures, e.g. HDR pictures, in at least one stream according to a specific and non-limitative embodiment of the invention.

The encoding device 1 comprises an input 10 configured to receive a current picture I of the sequence of pictures from a source. The input 10 is linked to a module 12 configured to determine a backlight picture B in the form of a weighted combination of shape functions on the basis of a current picture I of the sequence of pictures or a part of it, e.g. a luminance component L of the current picture I, responsive at least to spatially neighboring weights. The module 12 is linked to a module 16 configured to encode in a stream F1 data representative of the backlight picture B and to reconstruct these data. The data representative of the backlight picture B are for example the weights, also called backlight coefficients. In a first variant, the encoding device 1 comprises between the input 10 and the module 12, a module (not shown) configured to modulate the luminance component of the picture I into a modulated component. In this case, the modulated luminance component is processed by the module 12 to determine the backlight picture B instead of the non-modulated luminance component. In a second variant, the encoding device 1 comprises between the modules 12 and 16, a module (not shown) configured to modulate the backlight picture B into a modulated backlight picture. In this case, the modulated backlight picture is processed by the module 16 instead of the backlight picture B.

The module 16 is linked to a first output 18. The encoding device 1 further comprises a module 20 configured to determine a residual from the picture I and the backlight picture B. Exemplarily, the residual is equal to I/B, the division being performed for each component of the picture I. The module 20 is linked to a module 22 configured to encode the residual into a stream F2 that may be outputted on a second output 24 of the encoding device 1. In a variant, the encoding device comprises a module (not shown) between the modules 20 and 22 that is configured to map, i.e. transform, the residual into a viewable LDR picture. In this case, the module 22 is configured to encode the viewable LDR instead of the residual.

The streams F1 and F2 may be stored in a memory internal to the encoding device 1 or external to it. In a variant, the streams are sent to a destination. In another variant, the encoding device 1 comprises a module (not shown) configured to multiplex the streams F1 and F2 in a single stream F. In this case, the encoding device 1 may have a single output.

Figure 2 represents an exemplary architecture of the encoding device 1 according to a specific and non-limitative embodiment of the invention. The encoding device 1 comprises one or more processor(s) 110 , which is(are), for example, a CPU, a GPU and/or a DSP (English acronym of Digital Signal Processor), along with internal memory 120 (e.g. RAM, ROM, EPROM). The encoding device 1 comprises one or several Input/Output interface(s) 130 adapted to display output information and/or allow a user to enter commands and/or data (e.g. a keyboard, a mouse, a touchpad, a webcam); and a power source 140 which may be external to the encoding device 1. The encoding device 1 may also comprise network interface(s) (not shown). The pictures I may be obtained from a source. According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an picture capturing circuit (e.g. a sensor such as, for example, a CCD (or Charge-Coupled Device) or CMOS (or Complementary Metal-Oxide-Semiconductor)).

According to different embodiments of the invention, the streams F1, F2 or F may be sent to a destination. As an example, the stream(s) is(are) stored in a remote or in a local memory, e.g. a video memory or a RAM, a hard disk. In a variant, the stream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

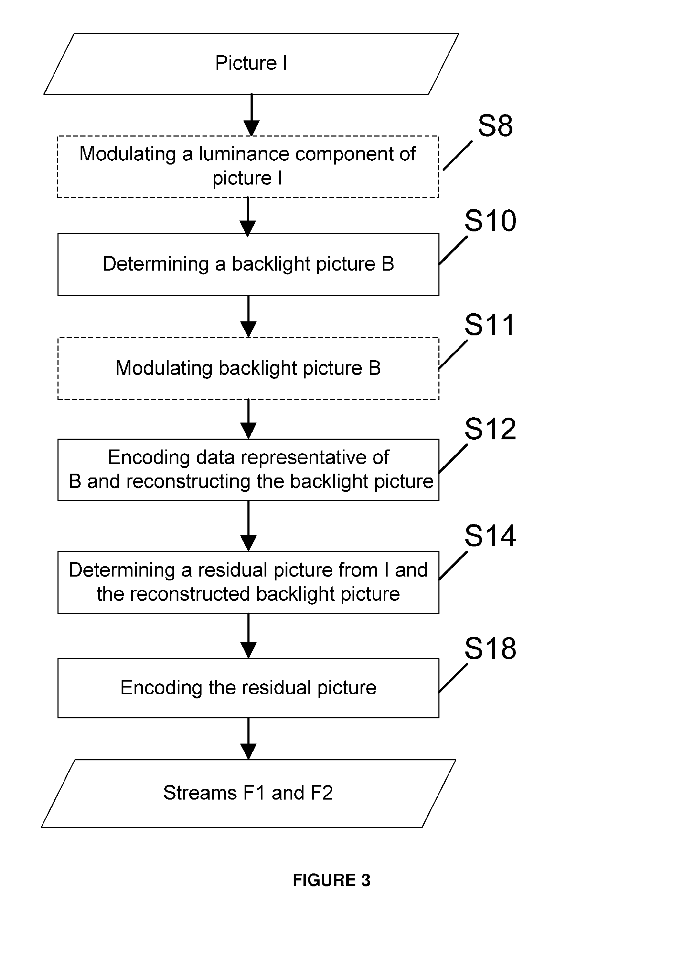

According to an exemplary and non-limitative embodiment of the invention, the encoding device 1 further comprises a computer program stored in the memory 120. The computer program comprises instructions which, when executed by the encoding device 1, in particular by the processor 110, make the encoding device 1 carry out the encoding method described with reference to figure 3. According to a variant, the computer program is stored externally to the encoding device 1 on a non-transitory digital data support, e.g. on an external storage medium such as a HDD, CD-ROM, DVD, a read-only and/or DVD drive and/or a DVD Read/Write drive, all known in the art. The encoding device 1 thus comprises an interface to read the computer program. Further, the encoding device 1 could access one or more Universal Serial Bus (USB)-type storage devices (e.g., "memory sticks.") through corresponding USB ports (not shown).

According to exemplary and non-limitative embodiments, the encoding device 1 is a device, which belongs to a set comprising:

- a mobile device ;
- a communication device ;
- a game device ;
- a tablet (or tablet computer) ;
- a laptop ;
- a still picture camera;
- a video camera ;
- an encoding chip;
- a still picture server; and

- a video server (e.g. a broadcast server, a video-on-demand server or a web server).

Figure 3 depicts a flowchart of a method for encoding a sequence of pictures, e.g. HDR pictures, in at least one stream according to a specific and non-limitative embodiment of the invention. The pictures are for example received from a source on the input 10 of the encoding device 1. It will be appreciated that the method for encoding is not restricted to HDR pictures and can be advantageously used to encode high bit depth pictures.

In an optional step S8, a luminance component L of a current picture I of the sequence is modulated with a mean luminance value $L_{mean}$ of the picture I into a modulated luminance component $L_{mod}$. Exemplarily, the mean luminance value $L_{mean}$ of the picture I is calculated over the whole luminance component L, i.e. $L_{mean} = \frac{1}{Nb} * \sum_i L_i$, where Nb is the number of pixels in the picture I and $L_i$ is the value of the luminance component for pixel i. It will be appreciated, however, that the invention is not restricted to this specific method for calculating the mean luminance value $L_{mean}$.

In the case where the picture I belongs to the linear color space (X,Y,Z), the luminance component L is a function f(.) of the component Y, e.g. L=f(Y). In the case where the picture I belongs to the linear color space (R,G,B), the luminance component L is obtained according to the ITU-R Recommendation BT. 709 by the following linear combination: L=f(0.2127*R+0.7152*G+0.0722*B) where f is a function. The function f can be either a logarithm function, a power function, the identity or any non-linear increasing function. It will be appreciated, however, that the invention is not restricted to this specific method for obtaining the luminance component L of the picture I.

In the case where f is the identity function or a power function, the modulated luminance component $L_{mod}$ is for example equal to

$$cst_{mod}.L_{mean}{}^{\alpha}.L/L_{mean}$$

In the case where f is a logarithm function, $L_{mod}$ is for example equal to

$$(L - L_{mean}) + \alpha * L_{mean} + cst_{mod}$$

$cst_{mod}$ and $\alpha$ are modulation coefficients.

In a step S10, a backlight picture B is determined, e.g. by the module 12 of the encoding device 1, in the form of a weighted combination of shape functions on the basis of a current picture I of the sequence of pictures or a part of it, e.g. the luminance component L of the current picture I or its modulated version $L_{mod}$ obtained at step S8, responsive at least to spatially neighboring weights. The luminance component L is obtained as disclosed above with respect to step S8. Later in the document, L is to be replaced by $L_{mod}$ in the case where step S8 applies.

The backlight picture B is determined as a weighted linear combination of shape functions $\psi_i$, i.e. $B = \sum_{i=1}^{i=N} a_i \psi_i$ where $a_i$ are weights also called backlight coefficients or backlight weights. The shape functions may be the true physical response of a display backlight (made of LED's for instance, each shape function then corresponding to the response of one LED) or may be a pure mathematical construction in order to fit the luminance component L or $L_{mod}$ of the current picture I. The shape functions may be defined by a Gaussian kernel such as exp(-(x²+y²)/σ²), where x and y are pixel coordinates and σ is a standard deviation.

In this case, determining the backlight picture B comprises determining the backlight coefficients $a_i$ from the current picture I, e.g. from its luminance component L, and further from spatially neighboring backlight coefficients. Specifically, the backlight coefficients $a_i$ are determined such that the backlight picture B fits the luminance component L of the HDR picture taking into account the spatially neighboring backlight coefficients.

In a specific embodiment, the backlight coefficients $a_i$ are determined so that a distance d between the backlight picture B and the luminance component L of the picture I is below a threshold value TH, i.e. d(B,L, Δa)<TH, where Δa is a Laplace operator applied on the backlight coefficients. In a variant of this embodiment, the backlight coefficients $a_i$ are determined so as to minimize the distance d, i.e.

$$a = \operatorname*{argmin}_{a'} d(B, L, \Delta a')$$

where a is a vector whose components are the backlight coefficients. There are many well-known methods to find the backlight coefficients $a_i$ minimizing

the distance d. For example when the distance d is defined as a mean square error between the backlight picture B and the luminance component L, one may use a least mean square method (whose English acronym is LMS) to minimize d. Exemplarily, the distance d between the backlight picture B and the luminance component L is a weighted sum of a first term and of a second term, the first term being the pixel by pixel difference between the backlight picture and the luminance component L and the second term being a Laplacian operator applied on the backlight coefficients, i.e. $d=||B-L||^2+\mu^2||\Delta a'||^2$ where $\mu$ is a parameter that tunes the strength of the stabilization. The norm $|| \ ||$ is for example the $L^2$-norm.

The minimization problem can be put under a matrix form. Let M be a matrix defined by the N shape functions $\psi_i$, where N is an integer

$$M = [\psi_1 \quad \cdots \quad \psi_N]$$

A shape function $\psi_i$ is defined by its value at each pixel and can thus represented by a column vector whose length is equal to the number of pixels of the picture I. Similarly, the luminance component L can be represented by a column vector $l$. The pixels in the picture I are ordered for example according to an horizontal raster scan order. Any other order can be chosen. The backlight picture B is thus represented by a vector M*a.

Let A be an augmented matrix defined as follows $A = \begin{bmatrix} M \\ \mu D \end{bmatrix}$ where $D$ is a NxN matrix representing a discrete version of the Laplace operator $\Delta$. Let $\hat{l}$ be an augmented luminance vector defined as follows $\tilde{l} = \begin{bmatrix} l \\ 0 \end{bmatrix}$.

The minimization problem is put under the LMS formulation as follows $a = \operatorname{argmin}_{a'} \left\| Aa' - \tilde{l} \right\|_2^2$ , the solution being $a = (A^T A)^{-1} A^T \tilde{l}$. Since $A^T \tilde{l} = \begin{bmatrix} M^T & \mu D^T \end{bmatrix} \begin{bmatrix} l \\ 0 \end{bmatrix} = M^T l$ and $A^T A = \begin{bmatrix} M^T & \mu D^T \end{bmatrix} \begin{bmatrix} M \\ \mu D \end{bmatrix} = M^T M + \mu^2 D^T D$, then $a = (M^T M + \mu^2 D^T D)^{-1} M^T l$. Calculating vector a, i.e. the backlight coefficients, with the Laplacian operator is not more complex than without it. Only the extra term $\mu^2 D^T D$ is added to $M^T M$.

The matrices M and A are sparse because the support of the shape functions is small. This makes the product $M^T l$ fast to compute. The matrices $M^T M$ and $A^T A$ are square and small, their sizes are NxN and their inversions are not very costly. For instance, one may use precondition for Gauss-pivoting, or conjugate gradient method for computing its inverse relative to the vector $M^T l$ or $A^T \tilde{l}$.

The proposed method is simple since it does not add any noticeable complexity to the backlight determination process and has proved to be very robust on many different video contents. Indeed, this solution does not require any additional pre-processing or post-processing step (e.g. smoothing of the backlight picture in the pixel domain) which can be costly. Only the matrix used in the LMS method to determine the backlight coefficients is changed from M to A to take into account the spatial stabilization constraint via the Laplacian operator.

The parameter $\mu$ tunes the strength of the stabilization. In the case where $\mu = 0$, there is no spatial stabilization. In the case where, the value of $\mu$ tends to $\infty$, the backlight picture is constant. In the case where $\mu$ is of small value then the spatial stabilization is weak while in the case where $\mu$ is of large value then the spatial stabilization is strong.

$D$ is a NxN matrix representing a discrete version of the Laplace operator $\Delta$. Many discretization of the Laplace operator exist. It will be appreciated, that the invention is not restricted to any specific method of discretization. Two of them are disclosed.

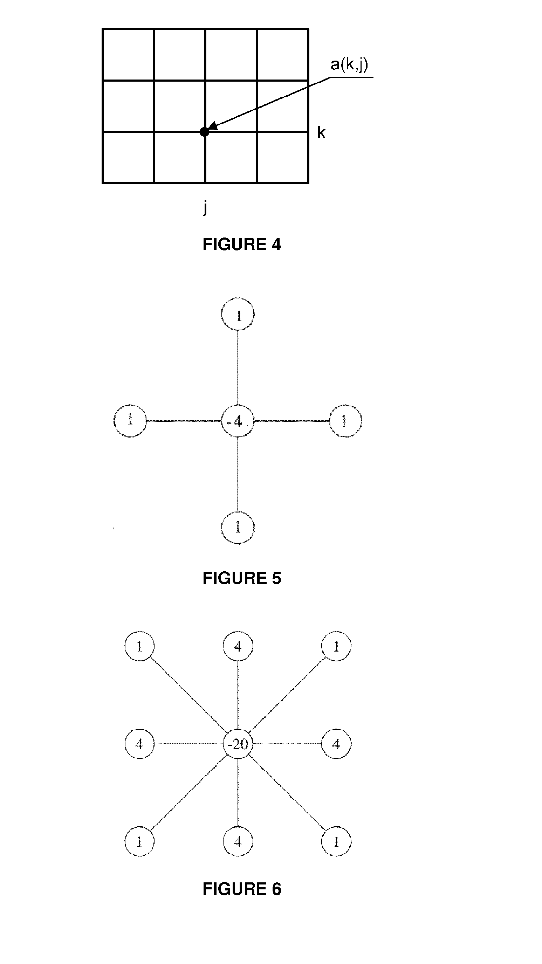

If the backlight coefficients $a_i$ are put on a homogeneous square grid of step $\Delta x$, let $a_i=a(k,j)$ be the backlight coefficient associated with the shape function $\psi_i$ centered at the location (k,j) on the grid as depicted on **figure 4,** where $k \in [0;Nbx[$ and $j \in [0;Nby[$. The center can be any pixel of the shape function. In the case where the shape function is symmetric, e.g. when $\psi_i(-x,-y)= \psi_i(x,y)$, the center of the shape function is the center of symmetry.

The 2D Laplace operator is defined in terms of partial derivatives as follows:$\Delta a = \partial_{xx}a + \partial_{yy}a$. Thus a five points discretization of the Laplace operator is defined as follows and illustrated on **figure 5:**

$$\Delta a(k,j) \approx \frac{a(k-1,j) - 2a(k,j) + a(k+1,j)}{\Delta x^2}$$
$$+ \frac{a(k,j-1) - 2a(k,j) + a(k,j+1)}{\Delta x^2}$$

A 9-point discretization of the Laplace operator is illustrated on **figure 6.** At picture boundary, so-called mirror meshes are used. This simply means that the backlight picture is mirrored at the boundaries to deduce the values of the backlight coefficients outside the picture. This ensures that the boundary condition is a nil derivative, i.e. a Neumann condition. For instance, if the lowest index is i=0, the backlight coefficients for i<0 are defined as follows: $a(-1, j) = a(1, j)$. In the same way, the backlight coefficients for j<0 are defined as follows: $a(k, -1) = a(k, 1)$. The backlight coefficients for i>Nbx-1 are defined as follows: $a(Nbx, j) = a(Nbx - 2, j)$. In the same way, the backlight coefficients for j>Nby-1 are defined as follows: $a(k, Nby) = a(k, Nby - 2)$. As a result, the matrix D is very sparse , as well as $D^T D$.

In a variant embodiment, the spatial stabilization is combined with a temporal stabilization. The backlight coefficients $a_i$ are determined so as to minimize the distance d, i.e.

$$a = \underset{a'}{\mathrm{argmin}}\, d\left(B, L, \Delta a', a_{\mathrm{prev}}\right)$$

where $a_{\mathrm{prev}}$ is a vector whose components are the backlight coefficients determined for a preceding picture. Exemplarily, the distance d between the backlight picture B and the luminance component L is a weighted sum of a first term, a second term, and a third term wherein the first term is the pixel by pixel difference between the backlight picture and the luminance component L, the second term is a distance between vectors a' and $a_{\mathrm{prev}}$, and the third term is a Laplacian operator applied on the backlight coefficients, i.e. $d = \|B-L\|^2 + \lambda^2\|a'-a_{\mathrm{prev}}\|^2 + \mu^2\|\Delta a'\|^2$ where $\lambda$ is a parameter that tunes the strength of the temporal stabilization. The norm $\|\ \|$ is for example the $L^2$-norm.

The solution to this problem is given by:

$$a = (M^T M + \mu^2 D^T D + \lambda^2 I_N)^{-1}(M^T l + \lambda a_{\mathrm{prev}})$$

In an optional step S11, the backlight picture B is modulated with a mean luminance value $L_{mean}$ of the picture I into a modulated backlight picture Bm. The optional step S11 may only be applied when optional step S8 is not. Therefore, either step S8 is applied or step S11 or none of them. Exemplarily, the mean luminance value $L_{mean}$ of the picture I is calculated over the whole luminance component L, i.e. $L_{mean} = \frac{1}{Nb} * \sum_i L_i$, where Nb is the number of pixels in the picture I and $L_i$ is the value of the luminance component for pixel i. In a variant, the mean luminance value $L_{mean}$ is calculated as follows:

$$L_{mean} = E\left(L^\beta\right)^{\frac{1}{\beta}}$$

where $\beta$ is a coefficient less than 1 and E(X) is the mathematical expectation value (mean) of the luminance component L.

This embodiment is advantageous because it avoids the mean luminance value $L_{mean}$ to be influenced by a few pixels with extreme high values which usually leads to very annoying temporal mean brightness instability when the picture I belongs to a sequence of pictures. It will be appreciated, however, that the invention is not restricted to these specific methods for calculating the mean luminance value $L_{mean}$.

In a variant, before being modulated, the backlight picture B is normalized by its mean value E(B) such that one gets a mid-gray-at-one backlight picture $B_{gray}$ for the picture (or for all pictures if the picture I belongs to a sequence of pictures):

$$B_{gray} = \frac{B}{E(B)}$$

Then, the mid-gray-at-one backlight picture $B_{gray}$ is modulated with the mean luminance value $L_{mean}$ of picture L as follows:

$$B_m = cst_{mod} . L_{mean}{}^{\alpha} . B_{gray}$$

with $cst_{mod}$ being a modulation coefficient and $\alpha$ being another modulation coefficient less than 1, typically between 0.3 and 0.5.

It may be noted that the modulation coefficient $cst_{mod}$ is tuned to get a good looking brightness for the residual picture and highly depends on the process to obtain the backlight picture. For example, $cst_{mod} \approx 1.7$ for a backlight picture obtained by least means squares.

Practically, by linearity, all operations to modulate the backlight picture apply to the backlight coefficients $a_i$ as a correcting factor which transforms the coefficients $a_i$ into new coefficients $\tilde{a}_i$:

$$B_m = \sum_i \tilde{a}_i \psi_i$$

In a step S12, data representative of the backlight picture B (e.g. either directly the backlight picture or the backlight coefficients) are encoded in a first stream F1, e.g. by the module 16 of the encoding device 1. The stream F1 may be stored on a local or a remote memory and/or transmitted through a communication interface (e.g. to a bus or over a communication network or a broadcast network). The backlight picture B is encoded, e.g. in an auxiliary picture or by frame packing. In a variant, the backlight coefficients $a_i$ or $\tilde{a}_i$ are encoded, e.g. in SEI messages or in user data, instead of the backlight picture B. Indeed, in the case where the shape functions are *a priori* known by both an encoder and a decoder, the decoder is able to reconstruct the backlight picture from the associated backlight coefficients. In a variant, the shape functions $\psi_i$ are *a priori* unknown. Consequently, they are encoded in the stream F1.

Advantageously, the backlight coefficients $a_i$ or $\tilde{a}_i$ are quantized before being entropy encoded in order to reduce the size of the stream F1.

A reconstructed version of the backlight coefficients $\tilde{a}_i$, of the backlight picture $\hat{B}$ and possibly of the shape functions $\hat{\psi}_i$ are also obtained. The reconstructed version of the backlight coefficients is obtained by inverse quantizing the coefficients $a_i$ or $\hat{a}_i$. In the case where the shape functions $\psi_i$ are *a priori* known, then $\hat{B} = \sum_i \hat{a}_i \psi_i$. In the case where the shape functions $\psi_i$ are *a priori* unknown, then $\hat{B} = \sum_i \hat{a}_i \hat{\psi}_i$.

In a step S14, a residual picture Res is determined from the picture I and the reconstructed version of the backlight picture $\hat{B}$, e.g. by the module 20. Exemplarily, the residual picture Res is determined by dividing each component of the picture I by the reconstructed version $\hat{B}$ of the backlight picture or by $f^1(\hat{B})$, where $f^1$ is the inverse function of the function f referred to in step S10. It is advantageous to use the reconstructed version $\hat{B}$ of the backlight picture or $f^1(\hat{B})$ because it ensures that the same backlight picture is used on both encoder and decoder sides. This leads to a better precision of the decoded picture. More precisely, the luminance component L and possibly each colour component C(i) of the picture I is divided by the reconstructed version $\hat{B}$ of the backlight picture or $f^1(\hat{B})$. This division is done pixel per pixel. For example, when the components of the picture I are expressed in the RGB color space, the component $R_{Res}$, $G_{Res}$ and $B_{Res}$ of the residual picture Res are obtained as follows: $R_{res} = R/f^1(\hat{B})$ $G_{res} = G/f^1(\hat{B})$

$B_{res} = Bl/f^1(\hat{B})$ where (R, G, Bl) are the component of I. $f^1$ can be the identity function.

When the components of the picture I are expressed in the XYZ color space, the component $X_{Res}$, $Y_{Res}$ and $Z_{Res}$ of the residual picture Res are obtained as followS: $X_{res} = X/f^1(\hat{B})$ $Y_{res} = Y/f^1(\hat{B})$ $Z_{res} = Z/f^1(\hat{B})$, , where (X, Y, Z) are the component of I.

In a step S18, the residual picture Res is encoded in a stream F2, e.g. by the module 22 of the encoding device 1. The stream F2 may be stored on a local or a remote memory and/or transmitted through a communication interface (e.g. to a bus or over a communication network or a broadcast network). The residual picture Res is an LDR picture and may therefore be encoded using a legacy 8/10 bits encoder, e.g. an H.264 or HEVC compliant encoder. Encoding the residual picture is usually done block by block. Encoding a block usually comprises determining a predictor, calculating residues between the block and the predictor. The residues are then transformed (e.g. by a DCT like transform, where DCT is the English acronym of "Discrete Cosine Transform") and quantized before being entropy coded. The streams F1 and F2 can be multiplexed into one and the same stream or can be separate streams.

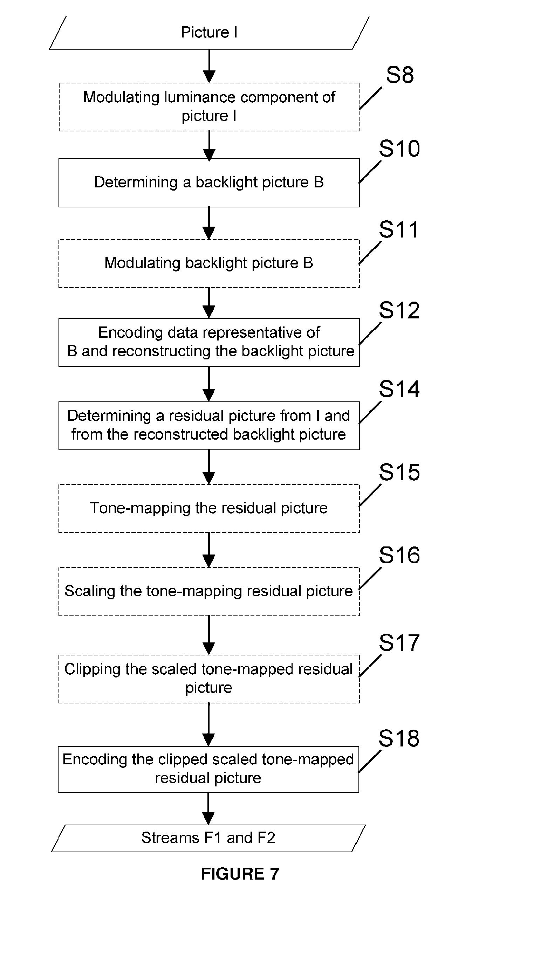

In a variant depicted on figure 7, the residual picture Res is first tone-mapped in a step S15 before being encoded in order to get a viewable residual picture $Res_v$. On figure 7 the steps identical to the steps described with reference to figure 3 are identified with the same numerical references and are not further described. The steps delimited with a dashed line are optional. Indeed, the residual picture Res may not be viewable because its dynamic range is too high and because its reconstructed version shows too visible artifacts. Tone-mapping the residual picture remedies to at least one of these drawbacks. Because the reconstructed backlight pictures $\hat{B}$ obtained at step S12 are spatially more stabled, the resulting LDR pictures obtained from the residual pictures Res are also spatially more stable and thus can be compress more efficiently.

The tone-mapping operator defined by Reinhard et al in the document entitled "Photographic tone reproduction for digital images," published in ACM Transactions on Graphics on July 2002 is an example of such a tone-mapping operator. The operator defined by Boitard et al in the document entitled "Temporal coherency for video tone mapping" published in Proc. SPIE 8499, Applications of Digital Image Processing (2012) is another example of such a tone-mapping operator. It will be appreciated, however, that the invention is not restricted to these specific tone-mapping operators. The tone-mapping operator shall be reversible.

Tone mapping the residual picture Res comprises either a gamma correction or a SLog correction according to the pixel values of the residual picture. Exemplarily, the viewable residual picture $Res_v$ is determined as follows:

$$Res_v = K.Res^{\gamma}$$

where K is a constant value and $\gamma$ is a coefficient of a gamma curve equal, for example, to 1/2.4.

Alternatively, the viewable residual picture $Res_v$ is determined as follows:

$$Res_v = a.\ln(Res + b) + c$$

where a,b and c are coefficients of a SLog curve determined such that 0 and 1 are invariant, and the derivative of the SLog curve is continuous in 1 when prolonged by a gamma curve below 1. Thus, a,b and c are functions of the parameter $\gamma$.

According to an embodiment, the parameter $\gamma$ of the gamma-Slog curve is encoded in the stream F1.

Applying a gamma correction on the residual picture Res, pulls up the dark regions but does not lower enough high lights to avoid burning of bright pixels.

Applying a SLog correction on the residual picture Res lowers enough high lights but does not pull up the dark regions.

Then, according to an advantageous embodiment, the module TMO applies either the gamma correction or the SLog correction according to the pixel values of the residual picture Res.

For example, when the pixel value of the residual picture Res is below a threshold (equal to 1), then the gamma correction is applied and otherwise the SLog correction is applied.

By construction, the viewable residual picture $Res_v$ usually has a mean value more or less close to 1 depending on the brightness of the picture I, making the use of the above gamma-Slog combination particularly efficient.

In a variant embodiment, the tone-mapped residual $Res_v$ is scaled before being encoded. Exemplarily, each component of the viewable residual picture $Res_v$ is multiplied by a scaling factor $cst_{scaling}$. The resulting residual picture $Res_s$ is then given by $Res_s = Cst_{scaling}.Res_v$.

In a specific embodiment, the scaling factor $cst_{scaling}$ is defined to map the values of the viewable residual picture $Res_v$ between from 0 to the maximum value $2^P-1$, where P is the number of bits allowed as input for coding.

This is naturally obtained by mapping the value 1 (which is roughly the mean value of the viewable residual picture $Res_v$) to the mid-gray value $2^{P-1}$. Thus, for a viewable residual picture $Res_v$ with a standard number of bits P=8, a scaling factor equal to 120 is a consistent value because close to the neutral gray at $2^7=128$.

In another variant, the scale residual $Res_s$ is clipped in a step S17 before being encoded in the step S18 to limit its dynamic range to a targeted dynamic range TDR which is defined, for example, according to the capabilities of the encoder.

According to this last embodiment, the resulting residual picture $Res_c$ is given, for example, by:

$$Res_c = max(2^N, Res_v)$$
$$Res_c = max(2^N, Res_s)$$

according to the embodiments of the method.

The invention is not limited to such clipping (max(.)) but extends to any kind of clipping.

Combining the scaling and clipping embodiments leads to a residual picture $Res_{sc}$ given by:

$$Res_{sc} = max(2^P, cst_{scaling}*Res_v)$$

or by $Res_{sc} = max(2^P, cst_{scaling}*Res_s)$

The tone-mapping and scaling of the viewable residual picture $Res_v$ is a parametric process. The parameters may be fixed or not and in the latter case they may be encoded in the stream F1. The constant value $\gamma$ of the gamma correction and the scaling factor $cst_{scaling}$ may be parameters which are encoded in the stream F1. It may be noted that the choice of the parameters $\alpha, cst_{mod}, cst_{scaling}, \gamma, \beta$ gives room for the choice of the tone-mapping which suits the content the best following the taste of an expert in post-production and color grading.

On the other hand, universal parameters may be defined in order to be acceptable for all of a large variety of pictures. Then, no parameters are encoded in the stream F1.

The encoding method may be applied on each picture of the sequence of pictures to encode the whole sequence.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding a sequence of pictures comprising for at least one picture I:

   - determining (S10) a backlight picture from the picture I;
   - encoding (S12) data representative of said backlight picture and reconstructing (S12) said backlight picture;
   - determining (S14) a residual picture from the picture I and from the reconstructed backlight picture; and
   - encoding (S18) the residual picture

   wherein determining (S10) the backlight picture from the picture I comprises determining a weighted combination of shape functions from the picture I responsive at least to spatially neighboring weights.

2. The method of claim 1, wherein determining (S10) the backlight picture from the picture I comprises determining a weighted combination of shape functions from the picture I responsive to spatially neighboring weights and further responsive to weights determined for a preceding picture

3. The method of claim 1 or 2, wherein determining (S10) a weighted combination of shape functions from the picture responsive at least to spatially neighboring weights comprises minimizing a distance equal to a weighted sum of a first term and a second term, wherein the first term is equal to a pixel by pixel difference between said backlight picture and a luminance component of said picture I and wherein the second term is equal to a Laplacian operator applied on the weights.

4. The method according to any of claims 1 to 3, wherein determining (S14) the residual picture from the picture I and the reconstructed backlight picture comprises dividing each component of said picture I by said backlight picture or by a function of said backlight picture.

5. A encoding device comprising a processor configured to:

   - determine a backlight picture from the picture I;
   - encode data representative of said backlight picture and reconstruct said backlight picture;
   - determine a residual picture from the picture I and from the reconstructed backlight picture; and
   - encode the residual picture;

   wherein determining the backlight picture from the picture I comprises determining a weighted combination of shape functions from the picture I responsive at least to spatially neighboring weights.

6. The encoding device according to claim 5, wherein determining a weighted combination of shape functions from the picture responsive at least to spatially neighboring weights comprises minimizing a distance equal to a weighted sum of a first term and a second term, wherein the first term is equal to a pixel by pixel difference between said backlight picture and a luminance component of said picture I and wherein the second term is equal to a Laplacian operator applied on the weights.

7. A device for encoding a sequence of pictures comprising:

   - means for determining (12) a backlight picture from at least one picture I of said sequence;
   - means for encoding (16) data representative of said backlight picture and reconstructing (16) said backlight picture;
   - means for determining (20) a residual picture from the picture I and from the reconstructed backlight picture; and
   - means for encoding (22) the residual picture;

wherein the means (12) for determining the backlight picture from the picture I are configured to determine a weighted combination of shape functions from the picture I responsive at least to spatially neighboring weights.

8.  The encoding device according to claim 7, wherein said device is configured to execute the steps of the encoding method according to any of claims 1 to 4.

9.  A computer program product comprising program code instructions to execute the steps of the encoding method according to any of claims 1 to 4 when this program is executed on a computer.

10. A processor readable medium having stored therein instructions for causing a processor to perform at least the steps of the encoding method according to any of claims 1 to 4.

1

10    12    16    18

Y

F1

20    22    24

F2

FIGURE 1

130    120

I / O

Memory

1

110

Processor

140

Power source

FIGURE 2

Picture I

Modulating a luminance component of
picture I

S8

Determining a backlight picture B

S10

Modulating backlight picture B

S11

Encoding data representative of
B and reconstructing the backlight picture

S12

Determining a residual picture from I and
the reconstructed backlight picture

S14

Encoding the residual picture

S18

Streams F1 and F2

FIGURE 3

a(k,j)

k

j

**FIGURE 4**

**FIGURE 5**

**FIGURE 6**

Picture I

Modulating luminance component of
picture I
S8

Determining a backlight picture B
S10

Modulating backlight picture B
S11

Encoding data representative of
B and reconstructing the backlight picture
S12

Determining a residual picture from I and
from the reconstructed backlight picture
S14

Tone-mapping the residual picture
S15

Scaling the tone-mapping residual picture
S16

Clipping the scaled tone-mapped residual
picture
S17

Encoding the clipped scaled tone-mapped
residual picture
S18

Streams F1 and F2

**FIGURE 7**

Europäisches
Patentamt

European
Patent Office

Office européen
des brevets

## EUROPEAN SEARCH REPORT

Application Number

EP 14 30 5970

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | David Touzé ET AL: "HDR Video Coding based on Local LDR Quantization", HDRi2014 -Second International Conference and SME Workshop on HDR imaging, 4 March 2014 (2014-03-04), XP055112158, Retrieved from the Internet: URL:http://people.irisa.fr/Ronan.Boitard/articles/2014/HDR Video Coding based on Local LDR Quantization.pdf [retrieved on 2014-04-04] * figures 1-3 * * section 3.1 "Generic description" * * section 4. "Implementation based on LDR and Illuminant Map" * | 1,2,4,5, 7-10 | INV. G09G3/34 H04N19/503 H04N19/196 H04N19/136 H04N19/184 |
| A | TRENTACOSTE ET AL: "Photometric image processing for high dynamic range displays", JOURNAL OF VISUAL COMMUNICATION AND IMAGE REPRESENTATION, ACADEMIC PRESS, INC, US, vol. 18, no. 5, 5 September 2007 (2007-09-05), pages 439-451, XP022231050, ISSN: 1047-3203, DOI: 10.1016/J.JVCIR.2007.06.006 * figure 1 * * section 3.2 "Real-time algorithm" * * section 4.4 "LED point spread function" * | 1-10 | TECHNICAL FIELDS SEARCHED (IPC) H04N G09G |

-/--

The present search report has been drawn up for all claims

| Place of search | Date of completion of the search | Examiner |
|---|---|---|
| The Hague | 2 December 2014 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 14 30 5970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BURINI NINO ET AL: "Block-Based Gradient Descent for Local Backlight Dimming and Flicker Reduction", JOURNAL OF DISPLAY TECHNOLOGY, IEEE SERVICE CENTER, NEW YORK, NY, US, vol. 10, no. 1, 1 January 2014 (2014-01-01), pages 71-79, XP011538508, ISSN: 1551-319X, DOI: 10.1109/JDT.2013.2286213 [retrieved on 2014-01-28] * the whole document * | 1-10 | |
| A | BURINI NINO ET AL: "Modeling Power-Constrained Optimal Backlight Dimming for Color Displays", JOURNAL OF DISPLAY TECHNOLOGY, IEEE SERVICE CENTER, NEW YORK, NY, US, vol. 9, no. 8, 1 August 2013 (2013-08-01), pages 656-665, XP011523529, ISSN: 1551-319X, DOI: 10.1109/JDT.2013.2253544 [retrieved on 2013-08-07] * the whole document * | 1-10 | TECHNICAL FIELDS SEARCHED (IPC) |

The present search report has been drawn up for all claims

| Place of search | Date of completion of the search | Examiner |
|---|---|---|
| The Hague | 2 December 2014 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

**REFERENCES CITED IN THE DESCRIPTION**

**Non-patent literature cited in the description**

- **REINHARD et al.** Photographic tone reproduction for digital images. *ACM Transactions on Graphics,* July 2002

- Temporal coherency for video tone mapping. *Proc. SPIE 8499, Applications of Digital Image Processing,* 2012